# EUROPEAN PATENT APPLICATION

(11) **EP 3 951 687 A2**
(43) Date of publication of application: **09.02.2022**
(21) Application number: 21211987.9
(22) Date of filing: 02.12.2021
(51) Int. Cl.: G06Q 10/10

(54) **BUSINESS CONTENT OUTPUT METHOD, APPARATUS, STORAGE MEDIUM AND PROGRAM PRODUCT**

(30) Priority: 16.12.2020 CN 202011490885
(71) Applicant: Beijing Baidu Netcom Science And Technology Co., Ltd., Beijing 100085 (CN)
(72) Inventor: ZHANG, Anzhan, Beijing, 100085 (CN); QU, Jingying, Beijing, 100085 (CN)
(74) Representative: Schwarz & Partner Patentanwälte GmbH

(57) **Abstract**

The present disclosure discloses a business content output method, apparatus, storage medium and program product, and relates to the middle platform technology, and may be applied to the field of cloud platform or cloud service. The specific implementation is: receiving a first business content request sent by a business foreground; acquiring first business content requested by the first business content request through a first business model, and sending the first business content to the business foreground, wherein the first business content is general business content provided to multiple business foregrounds; receiving a second business content request sent by the business foreground; acquiring second business content requested by the second business content request through a second business model, and sending the second business content to the business foreground, wherein the second business content is business content agreed in advance with the business foreground. The present disclosure can reduce the development cost of the business foreground.

## Description

### TECHNICAL FIELD

The present disclosure relates to the field of computer technology, and in particular to middle platform technology.

### BACKGROUND

The current system can often be divided into business background, business middle platform and business foreground. In actual applications, typically the frequency of changes in the business background is lower than that of the business middle platform, and the frequency of changes in the business middle platform is lower than that of the business foreground. In related art, the business middle platform must require the business foreground to develop part of the codes of the business middle platform to meet the needs of the business foreground.

### SUMMARY

The present disclosure provides a business content output method, apparatus, storage medium and program product.

According to an aspect of the present disclosure, a business content output method is provided, including:
receiving a first business content request sent by a business foreground;
acquiring first business content requested by the first business content request through a first business model, and sending the first business content to the business foreground, wherein the first business content is general business content provided to multiple business foregrounds;
receiving a second business content request sent by the business foreground;
acquiring second business content requested by the second business content request through a second business model, and sending the second business content to the business foreground, wherein the second business content is business content agreed in advance with the business foreground.

According to another aspect of the present disclosure, a business content output apparatus applied to a business middle platform is provided, including:
a first receiving module configured to receive a first business content request sent by a business foreground;
a first sending module configured to acquire first business content requested by the first business content request through a first business model, and send the first business content to the business foreground, wherein the first business content is general business content provided to multiple business foregrounds;
a second receiving module configured to receive a second business content request sent by the business foreground;
a second sending module configured to acquire second business content requested by the second business content request through a second business model, and send the second business content to the business foreground, wherein the second business content is business content agreed in advance with the business foreground.

According to another aspect of the present disclosure, an electronic device is provided, including:
at least one processor; and
a memory communicatively connected with the at least one processor; where,
the memory stores instructions executable by the at least one processor, and the instructions are executed by the at least one processor, so that the at least one processor can execute the business content output method provided by the present disclosure.

According to another aspect of the present disclosure, a computer-readable storage medium is provided, and the computer-readable storage medium stores computer instructions causing the computer to execute the business content output method provided by the present disclosure.

According to another aspect of the present disclosure, a computer program product is provided, and the computer program product includes a computer program. When executing the computer program, a processor implements the business content output method provided by the present disclosure.

According to the technical solution of the present disclosure, since different business contents are output to the business foreground through the first business model and the second business model, the development cost of the business foreground can be reduced.

It should be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution, and do not constitute a limitation to the present disclosure. Among them:
FIG. 1 is a flowchart of a business content output method provided by the present disclosure;
FIG. 2 is a schematic experimental diagram of a business content output method provided by the present disclosure;
FIG. 3 is a structural diagram of a business content output apparatus provided by the present disclosure;
FIG. 4 is a flowchart of another business content output apparatus provided by the present disclosure;
FIG. 5 is a flowchart of an electronic device for implementing the business content output method according to an embodiment of the present disclosure.

### DETAILED DESCRIPTION

The following describes exemplary embodiments of the present application with reference to the accompanying drawings, which include various details of the embodiments of the present application to facilitate understanding, and should be regarded as merely exemplary. Therefore, those of ordinary skill in the art should recognize that various changes and modifications can be made to the embodiments described herein without departing from the scope and spirit of the present disclosure. Likewise, for clarity and conciseness, descriptions of well-known functions and structures are omitted in the following description.

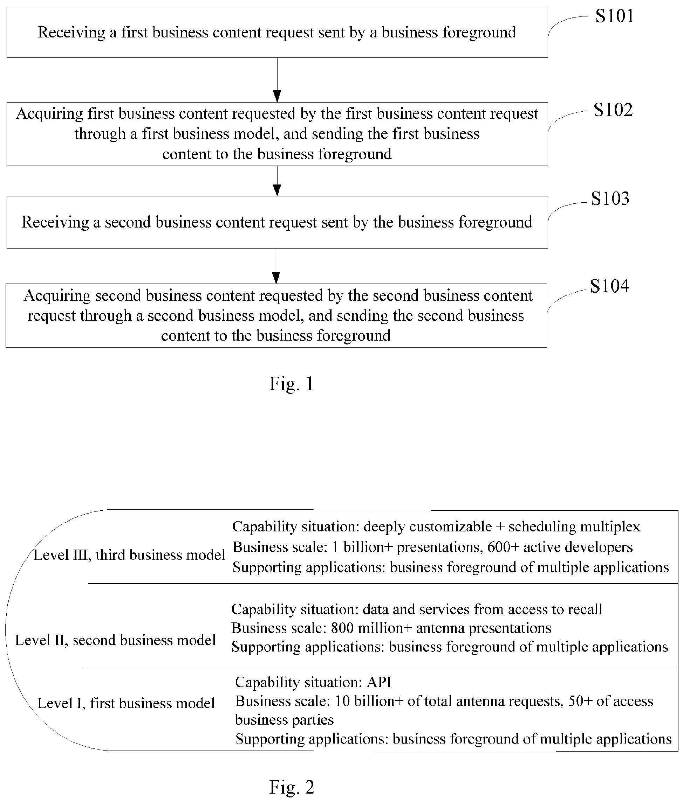

Please refer to FIG. 1, FIG. 1 is a flowchart of an business content output method provided by the present disclosure, as shown in FIG. 1, the method includes the following steps:
Step 101, receiving a first business content request sent by a business foreground;

The above step can be performed by a business middle platform. The business middle platform can be a middle platform for supporting multiple business foregrounds. For example, the above-mentioned business middle platform can provide business content for the foregrounds such as search business foregrounds, input method business foregrounds, medical business foregrounds, novel business foregrounds, medical beauty business foregrounds, and automobile business foregrounds.

In the present disclosure, the business middle platform can acquire the data provided by the business background, and perform corresponding middle platform processing on the data provided by the business background to obtain the business content provided to the business foreground. It should be noted that the present disclosure does not limit the content of the middle platform processing performed by the business middle platform, for example: including but not limited to reordering, data filtering, data processing, data format adjustment, data production, data classification, data verification, etc..

The above-mentioned business foreground may be the business foreground of a specific business, for example: search business foreground, input method business foreground, medical business foreground, novel business foreground, medical beauty business foreground, automobile business foreground, etc..

The above-mentioned first business content request may be used to request business content applicable to multiple business foregrounds, for example, multiple business foregrounds all request search results, request recommendation results, request news data, or request weather data.
Step 102, acquiring first business content requested by the first business content request through a first business model, and sending the first business content to the business foreground, wherein the first business content is general business content provided to multiple business foregrounds;

After receiving the first business content request, the business middle platform acquires the business content requested by the first business content request through the first business model, and sends it to the above business foreground.

Wherein, the above-mentioned that the first business content is general business content provided to multiple business foregrounds, may be that the business content sent in step S102 of the first business content request for different business foregrounds may be the same, for example: for the input method business foreground, the search business foreground, if the first business content requests sent by the two business foregrounds are the same, the first business content sent to the two business foregrounds through the above-mentioned first business model may be the same.
Step 103, receiving a second business content request sent by a business foreground;

The above-mentioned second business content request may be used to request business content applicable to the above business foreground, for example, request search results, request recommendation results, request news data, or request weather data.

Step 104, acquiring second business content requested by the second business content request through a second business model, and sending the second business content to the business foreground, wherein the second business content is business content agreed in advance with the business foreground.

The acquiring second business content requested by the second business content request through a second business model, may be acquiring the second business content requested by the second business content request and agreed in advance with the business foreground through the second business model.

It should be noted that the first business model and the second business model in the present disclosure may be functional modules pre-deployed in the business middle platform, and these functional modules are functional modules used to respond to business requests to acquire corresponding business content. The present disclosure does not limit the implementation of the business model. For example, the business model may include at least one of programs, functions, algorithms, AI models, business systems, business frameworks, etc., used to acquire corresponding business content in response to business content requests. Further, the business model can also be referred to as a capability output model.

According to the technical solution of the present disclosure, since different business contents are output to the business foreground through the first business model and the second business model, the development cost of the business foreground can be reduced. For example, through the first business model, it can be realized that when the business foreground acquires the first business content, the business foreground directly obtains the first business content through the remote service invoking the business middle platform, thereby reducing the development cost of the business foreground.

It should be noted that the above-mentioned method in the present disclosure may be executed by a business middle platform, and the business middle platform may be deployed in electronic devices such as servers, computers, and mobile phones.

As an optional implementation, the above-mentioned first business model is a business model served through interface, and the business model is a business model used to serve multiple business foregrounds.

The above-mentioned first business model is a business model served through interface, it may be that multiple business foregrounds can call the first business model through the above-mentioned interface service to obtain corresponding first business content.

For example, a first business model for search already exists in the business middle platform, so the input method business foreground can directly call the business model to obtain the corresponding search results. Specifically, the input method business foreground hopes that when a user inputs some words, matching whether there are some high-quality search results can improve the user experience, for example, "XX area weather" is input, then the user is likely to search for XX area weather in a search engine or App, at this time, XX area weather forecast information may pop up in the input method business foreground, which can greatly improve the user experience. For another example YY stock is input, and a page of YY real-time stock price may pop up.

In this implementation, through the above-mentioned first business model, it is possible to realize that the business middle platform directly provides business content to the business foreground, and the business foreground does not need to make development related to acquiring the business content, thereby reducing the development cost of the business foreground. For example: in these scenarios, the business foreground needs the business middle platform to provide complete business content, and the foreground only wants to use the business content of the business middle platform without doing related development. For example, home pages of some Apps require some recommended information, and general recommendation results can be acquired based on the existing recommendation system in the business middle platform.

In addition, in this embodiment, in order to improve the business performance of the business middle platform, the business middle platform can pre-appoint with the business foreground to acquire service parameter information such as the stability, performance, and peak access throughput of the first business content, so that the business middle platform provides the first business content for the business foreground based on these parameter information.

As an optional implementation, the second business model is used to acquire corresponding business content according to the second business content request, and output the second business content in a data format agreed in advance with the business foreground according to the acquired business content.

The above second business model may be negotiated with the above business foreground in advance, and specifically may be an agreed data format of the business content output by the second business model.

In this implementation, the second business content in the agreed data format may be output to the business foreground through the above second business model, thereby it can be achieved that the business foreground only needs to define the data format when acquiring the second business content, and the business content in this data format can be obtained, so that the development cost of the business foreground is reduced. For example: the business foreground predefines the data format of the search service. After acquiring a search request, the business middle platform acquires the search result corresponding to the search request through the corresponding search model and search algorithm included in the second business model, and then outputs the search result according to the data format agreed in advance with the business foreground.

As an optional implementation, the method further includes:
receiving a third business content request sent by the business foreground;
acquiring third business content requested by the third business content request through a third business model, and sending the third business content to the business foreground, wherein the third business content is business content that is customized for the business foreground.

The aforementioned third business content request may be used to request business content customized for the business foreground. After receiving the third business content request, the business middle platform acquires the third business content that is customized for the business foreground requested by the third business content request through the third business model.

The aforementioned third business model may be functional modules pre-deployed in the business middle platform, and the functional module is a functional module used to respond to business requests to acquire corresponding business content. The present disclosure does not limit the implementation of the third business model. For example, the business model may include at least one of programs, functions, algorithms, AI models, business systems, business frameworks, etc., used to acquire corresponding business content in response to business requests.

In this embodiment, the third business model can provide customized business content to the business foreground, so that the business performance of the business foreground can be improved.

Optionally, the third business model includes:
A customized business model customized for the foreground business, and a general business model matched with the customized business model.

The aforementioned customized business model customized for the foreground business may be a bottom-level business model that provides a business framework for the aforementioned business foreground, and the business model may include at least one of programs, functions, algorithms, AI models, business systems, business frameworks, etc. customized for the aforementioned business front desk.

The above-mentioned general business model matched with the customized business model may be a general business model used to complement the foregoing customized business model. For example: in the case where the above-mentioned business middle platform is used to obtain search results, the general business model may be a model used for inverted indexing service, forward computing service, estimation service, semantic indexing service, etc.

The above-mentioned general business model can be used for further processing of the business content obtained by the above-mentioned customized business model, such as inverted index, forward computation, estimation, semantic index and other processing.

In this implementation, since the third business model includes a customized business model and a general business model, the business effect of the third business content acquired by the business foreground can be improved. In addition, in order to decouple the business middle platform and the business foreground to improve the capabilities of the business middle platform and the business foreground, the above-mentioned third business model may be to provide a unified business framework for the business foregrounds. And the business foreground can do custom development based on the business framework, independently online and change, etc. The business middle platform provides the business foreground with the underlying operating mechanism of the business framework and the general services that the business framework depends on (i.e. the above-mentioned general business model).

The present disclosure does not limit the third business model to include a customized business model and a general business model. For example, it may also include only a customized business model.

It should be noted that the first business model, the second business model, and the third business model in this disclosure may be applied to different stages of the business foreground. Among them, the first business model can be used for the initial development services of the business foreground, and the second business model can be used for the middle development services of the business foreground, and the third business model can be used for the later development services of the business foreground.

For example: the business foreground can acquire a general search result through the first business model in the initial development (such as the first month or the first week or the first day), so that the foreground business has its own business content, but these only have general requires on effects of the business content . For example, in the scenario of a new business foreground, the business foreground hopes to use the existing first business model of the business middle platform to quickly build business capabilities (such as search capabilities, recommendation capabilities), and provides users with general services first, and then defines a specific data format based on the user's online feedback and actual effect analysis to improve the business performance of the business foreground.

In the middle development of the business foreground (such as the second month or the second week or the second day), a specific data format can be defined based on the user feedback and actual effects of the business content in the initial development, so as to acquire business content in the specific data format through the second business model, thereby improving the business effect.

In the later development of the business foreground (such as the third month or the third week or the third day), customized requirements of content processing and calculation of the business content, customized requirements of online sort effect and so on may be determined on the basis of the business content output by the first business model and the second business model.

In this way, customized business content can be obtained through the above-mentioned third business model to further improve business effects.

In this disclosure, through the above three levels of the first business model, the second business model and the third business model, the customization capabilities of the business are gradually improved, so as to realize the business foreground from no business content to business content, and then to the rapid development of business content, so that the business foreground can obtain beneficial effects such as users and data business.

Through the experimental data, the first business model, the second business model, and the third business model can realize hundreds of millions of business content requests, and can serve the business foregrounds of multiple applications, as shown in Figure 2. In addition, the first business model can be called through an application programming interface (API), while the second business model can implement data and services from access to recall, that is, recalling the business content corresponding to the data and services, and the third business model supports deep customization, and the third business model can be multiplexed for multiple business foregrounds with the same customization.

According to the technical solution of the present disclosure, since different business contents are output to the business foreground through the first business model and the second business model, the development cost of the business foreground can be reduced. In order to decouple the middle platform and the foreground,

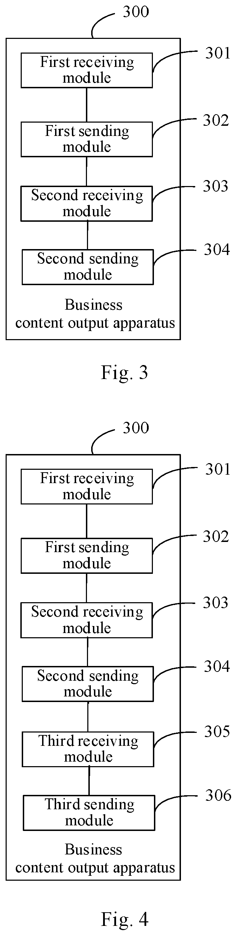

Please refer to Fig. 3, FIG. 3 is a flowchart of an business content output apparatus provided by the present disclosure, as shown in FIG. 3, the business content output apparatus 300 includes:
a first receiving module 301, configured to receive a first business content request sent by a business foreground;
a first sending module 302, configured to acquire first business content requested by the first business content request through a first business model, and send the first business content to the business foreground, wherein the first business content is general business content provided to multiple business foregrounds;
a receiving module 303, configured to receive a second business content request sent by the business foreground;
a second sending module 304, configured to acquire second business content requested by the second business content request through a second business model, and send the second business content to the business foreground, wherein the second business content is business content agreed in advance with the business foreground.

Optionally, as shown in FIG. 4, the apparatus further includes:
a third receiving module 305, configured to receive a third business content request sent by the business foreground;
a third sending module 306, configured to acquire third business content requested by the third business content request through a third business model, and send the third business content to the business foreground, wherein the third business content is business content that is customized for the business foreground.

Optionally, the above-mentioned first business model is a business model served through interface, and the business model is a business model used to serve multiple business foregrounds;
the second business model is used to acquire corresponding business content according to the second business content request, and output the second business content in a data format agreed in advance with the business foreground according to the acquired business content.

Optionally, the third business model includes:
a customized business model customized for the foreground business, and a general business model matched with the customized business model.

The apparatus provided in the present application can implement the various processes implemented in the method embodiment shown in FIG. 1, and can achieve the same beneficial effects. To avoid repetition, details are not described herein again.

According to the embodiments of the the present disclosure, an electronic device and a readable storage medium storing computer instructions thereon are further provided.

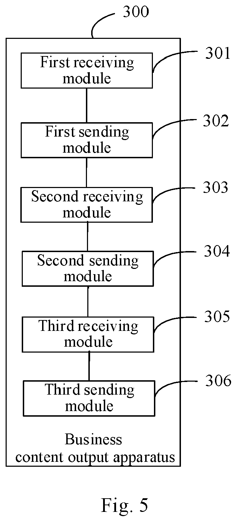

As shown in FIG. 5, it is a flowchart of an electronic device of the business content output method according to the embodiment of the present disclosure. The electronic apparatus is intended to represent various forms of digital computers, such as laptop computers, desktop computers, workbenches, personal digital assistants, and other suitable computers. The Electronic apparatus may also represent various forms of mobile devices, such as personal digital processing, cellular phones, intelligent phones, wearable devices, and other similar computing devices. The components shown here, their connections and relationships, and their functions are merely for illustration, and are not intended to be limiting implementations of the disclosure described and/or required herein.

As shown in FIG. 5, the electronic device includes: one or more processors 501, a memory 502, and interfaces for connecting various components, including a high-speed interface and a low-speed interface. The various components are interconnected using different buses and may be mounted on a common motherboard or otherwise installed as required. The processor may process instructions executed within the electronic apparatus, wherein the instructions executed within the electronic apparatus includes those instructions stored in or on a memory for displaying graphic information of a graphical user interface (GUI) on an external input/output device, such as a display device coupled to the interface. In other implementations, multiple processors and/or multiple buses may be used with multiple memories and multiple storages, if desired. Similarly, multiple electronic devices may be connected, each providing some necessary operations (for example, as a server array, a group of blade servers, or a multiprocessor system). One processor 501 is shown as an example in FIG. 5.

The memory 502 is a non-transitory computer-readable storage medium provided by the present disclosure. The memory stores instructions executable by at least one processor, so that the at least one processor executes the business content output method provided in the present disclosure. The non-transitory computer-readable storage medium of the present disclosure stores computer instructions, which are used to cause a computer to execute the business content output method provided by the present disclosure.

As a non-transitory computer-readable storage medium, the memory 502 may be used to store non-transitory software programs, non-transitory computer executable programs, and modules, such as a program instruction/module/unit (for example, the first receiving module 301, first sending module 302, second receiving module 303, and second sending module 304 shown in FIG. 3) corresponding to the business content output method in embodiments of the present disclosure. The processor 501 executes various functional applications and data processing of the server by running non-transitory software programs, instructions, and modules stored in the memory 502, that is, the business content output method in embodiments of the foregoing method is implemented.

The memory 502 may include a program storage partition and a data storage partition, where the program storage partition may store an operating system and an application program required for at least one function, and the data storage partition may store data created for use by the electronic device according to the business content output method. In addition, the memory 502 may include a high-speed random-access memory, and may also include a non-transitory memory, such as at least one magnetic disk storage device, a flash memory device, or other non-transitory solid-state storage device. In some embodiments, the memory 502 may optionally include a memory remotely disposed with respect to the processor 501, and the remote memory may be connected through a network to the electronic device of the business content output method. Examples of the above network include, but are not limited to, the Internet, an Intranet, a local area network, a mobile communication network and combinations thereof.

The electronic device of the business content output method may further include an input apparatus 503 and an output apparatus 504. The processor 501, the memory 502, the input apparatus 503, and the output apparatus 504 may be connected via a bus or other means. FIG. 5 has illustrated a connection via a bus as an example.

The input apparatus 503 can receive inputted numeric or character information, and generate a key signal input related to a user setting and function control of an electronic device of business content output, such as a touch screen, a keypad, a mouse, a trackpad, a touchpad, a pointing stick, one or more mouse buttons, a trackball, a joystick or the like. The output apparatus 504 may include a display apparatus, an auxiliary lighting apparatus (e.g., an LED), a haptic feedback apparatus (e.g., a vibration motor) and the like. The display apparatus may include, but is not limited to, a liquid crystal display (LCD), a light emitting diode (LED) display, and a plasma display. In some embodiments, the display apparatus may be a touch screen.

Various implementations of the systems and technologies described herein may be implemented in a digital electronic circuitry, an integrated circuit system, an application-specific integrated circuit (ASIC), computer hardware, firmware, software, and/or combinations thereof. These various embodiments may include: implementations in one or more computer programs, which can be executed by and/or interpreted on a programmable system including at least one programmable processor, the programmable processor may be application specific or general-purpose and can receive data and instructions from a storage system, at least one input apparatus and/or at least one output apparatus, and can transmit the data and instructions to the storage system, the at least one input apparatus, and the at least one output apparatus.

These computing programs (also known as programs, software, software applications or codes) include machine instructions of a programmable processor, and can be implemented using high-level procedures and/or object-oriented programming languages, and/or assembly/machine languages. As used herein, the terms "machine-readable medium" and "computer-readable medium" both refer to any computer program product, apparatus, and/or apparatus (e.g., a magnetic disk, an optical disk, a memory, a programmable logic device (PLD)) used to provide the machine instructions and/or data to a programmable processor, including machine-readable media that receive machine instructions as machine-readable signals. The term "machine-readable signal" refers to any signal used to provide machine instructions and/or data to a programmable processor.

To provide interaction with the user, the systems and technologies described herein can be implemented on a computer that has: a display apparatus (e.g., a cathode ray tube (CRT) or liquid crystal display (LCD) monitor) for displaying information to the user; and a keyboard and a pointing apparatus (e.g., a mouse or a trackball) through which the user can provide input to the computer. Other kinds of apparatuses may also be used to provide interaction with the user. For example, the feedback provided to the user may be any form of sensory feedback (e.g., a visual feedback, an auditory feedback, or a haptic feedback), and may be in any form (including an acoustic input, a voice input, or a haptic input) to receive input from the user.

The systems and technologies described herein can be implemented in a computing system that includes a back-end component (e.g., as a data server), or a middleware components (e.g., an application server), or a front-end component (e.g., a user computer with a graphical user interface or web browser through which the user can interact with the implementation of the systems and technologies described herein), or any combination of such back-end component, middleware component or front-end component. Various components of the system may be interconnected by digital data communication in any form or via medium (e.g., a communication network). Examples of a communication network include: a local area network (LAN), a wide area network (WAN) and the Internet.

The computer system may include a client and a server. The client and server are typically remote from each other and interact via a communication network. The client-server relationship is created by computer programs running on respective computers and having a client-server relationship with each other.

The present disclosure provides a computer program product including a computer program. When executing the computer program, a processor implements the business content output method provided by the present disclosure.

According to the technical solution of the present disclosure, since different business contents are output to the business foreground through the first business model and the second business model, the development cost of the business foreground can be reduced.

It should be understood that the various forms of processes shown above may be used, and steps may be reordered, added or removed. For example, various steps described in the present disclosure can be executed in parallel, in sequence, or in alternative orders. As long as the desired results of the technical solutions disclosed in the present disclosure can be achieved, no limitation is imposed herein.

The foregoing specific implementations do not constitute any limitation on the protection scope of the present disclosure. It should be understood by those skilled in the art that various modifications, combinations, sub-combinations and substitutions may be made as needed by design requirements and other factors. Any and all modification, equivalent substitution, improvement or the like within the spirit and concept of the present disclosure shall fall within the protection scope of the present disclosure.

## Claims

1. A business content output method, comprising:
receiving (S101) a first business content request sent by a business foreground;
acquiring (S102) first business content requested by the first business content request through a first business model, and sending the first business content to the business foreground, wherein the first business content is general business content provided to multiple business foregrounds;
receiving (S103) a second business content request sent by the business foreground;
acquiring (SI04) second business content requested by the second business content request through a second business model, and sending the second business content to the business foreground, wherein the second business content is business content agreed in advance with the business foreground.

2. The method according to claim 1, further comprising:
receiving a third business content request sent by the business foreground;
acquiring third business content requested by the third business content request through a third business model, and sending the third business content to the business foreground, wherein the third business content is business content that is customized for the business foreground.

3. The method according to claim 1, wherein, the first business model is a business model served through interface, and the business model is a business model used to serve multiple business foregrounds;
the second business model is used to acquire corresponding business content according to the second business content request, and output the second business content in a data format agreed in advance with the business foreground according to the acquired business content.

4. The method according to claim 2, wherein the third business model comprises:
a customized business model customized for the foreground business, and a general business model matched with the customized business model.

5. A business content output apparatus (300) applied to a business middle platform, comprising:
a first receiving module (301) configured to receive a first business content request sent by a business foreground;
a first sending module (302) configured to acquire first business content requested by the first business content request through a first business model, and send the first business content to the business foreground, wherein the first business content is general business content provided to multiple business foregrounds;
a second receiving module (303) configured to receive a second business content request sent by the business foreground;
a second sending module (304) configured to acquire second business content requested by the second business content request through a second business model, and send the second business content to the business foreground, wherein the second business content is business content agreed in advance with the business foreground.

6. The apparatus according to claim 5, further comprising:
a third receiving module (305), configured to receive a third business content request sent by the business foreground;
a third sending module (306), configured to acquire third business content requested by the third business content request through a third business model, and send the third business content to the business foreground, wherein the third business content is business content that is customized for the business foreground.

7. The apparatus according to claim 5, wherein, the first business model is a business model served through interface, and the business model is a business model used to serve multiple business foregrounds;
the second business model is used to acquire corresponding business content according to the second business content request, and output the second business content in a data format agreed in advance with the business foreground according to the acquired business content.

8. The apparatus according to claim 6, wherein the third business model comprises:
a customized business model customized for the foreground business, and a general business model matched with the customized business model.

9. An electronic device, comprising
at least one processor; and
a memory communicatively connected with the at least one processor; where,
the memory stores instructions executable by the at least one processor, and the instructions are executed by the at least one processor to cause the at least one processor implement the method according to any one of claims 1 to 4.

10. A non-transitory computer readable storage medium, storing thereon computer instructions that are used to enable a computer to implement the method according to any one of claims 1 to 4.

11. A computer program product comprising a computer program, wherein the computer program causes a processor to implement the business content output method according to any one of claims 1 to 4 when the computer program is executed by the processor.
